# EUROPEAN PATENT APPLICATION

(11) **EP 2 282 075 A1**
(43) Date of publication of application: **09.02.2011**
(21) Application number: 10171158.8
(22) Date of filing: 28.07.2010
(51) Int. Cl.: F16D 69/02

(54) **Nonwoven preforms made with increased areal weight fabric segments for aircraft friction materials**

(30) Priority: 06.08.2009 US 536924
(71) Applicant: Honeywell International Inc., Morristown, NJ 07962 (US)
(72) Inventor: La Forest, Mark L., Morristown, NJ 07962-2245 (US); James, Mark Criss, Morristown, NJ 07962-2245 (US); Murdie, Neil, Morristown, NJ 07962-2245 (US)
(74) Representative: Buckley, Guy Julian

(57) **Abstract**

Method of making carbon-carbon composite brake disc or pad. The manufacturing method herein benefits from lowered manufacturing cycle time, reduced cost of manufacturing, and at the same time increased density of the final composite. The method includes: providing a fibrous nonwoven fabric segment comprised of OPAN fibers, the segment being produced from high basis weight fabric; providing a needler to needle layers of the fabric segments to one another; needling two layers of the fabric segments to one another and then needling sequential layers of the fabric segments on top of the layers thereof which have previously been needled together, to construct a brake disc or pad preform; carbonizing the fibrous preform to obtain a carbon-carbon preform; and infiltrating the resulting carbonized needled fibrous fabric preform via CVD/CVI processing in order to produce a carbon-carbon composite brake disc or pad which has a density of at least 1.70 grams per cubic centimeter.

## Description

### FIELD OF THE INVENTION

The present invention relates to improvements in the manufacture of carbon-carbon composite materials which are useful as friction materials (e.g., brake discs and pads) for aircraft. Carbon fiber preforms are made by needling together nonwoven fabric segments made from polyacrylonitrile carbon fiber precursors. The carbon fiber preforms are then infiltrated via chemical vapor deposition processing in order to produce carbon-carbon composite preforms having increased density.

### BACKGROUND OF THE INVENTION

Nonwoven preform technology enables the production of high performance carbon-carbon (C-C) composite brakes for both aerospace and automotive applications. This technology typically involves needle-punching oxidized polyacrylonitrile ("PAN") nonwoven fabric segments into an annular ring (a "preform") using an annular needling machine. However, the present invention is not necessarily limited to annular needlers. Similar beneficial results can be obtained with other needlers common in the industry for producing carbon preforms.

Competition drives lower cost in the market place for aircraft friction materials. At the same time, the market demands improvements to on-time delivery and superior product performance. In order to help achieve these goals, improvements to the manufacturing processes of C-C composites used as friction materials are constantly being made.

The following patent publications provide background on the production of carbon-carbon composite friction materials

EP 1 724 245 A1 (Simpson et al.) describes a process for producing carbon-carbon composite preform, by: providing short carbon fiber or fiber precursor segments; providing particulate pitch; combining the fiber segments and pitch particles in a mold; subjecting the resulting mixture to elevated pressure to create an uncarbonized preform; placing the preform in a constraint fixture; and carbonizing the combined components in the constraint fixture at an elevated temperature to provide a preform having a desired density.

EP 0 946 455 B1 (Murdie et al.) discloses a carbon-carbon composite material made by providing an open-celled carbon foam preform and densifying the preform with carbonaceous material. The carbon-carbon composite material can be heat treated to provide thermal management materials, structural materials, or friction materials for use in brake or clutch mechanisms.

WO 2006/101799 A2 (Fryska et al.) describes an invention in which small ceramic particles (e.g., of TiC) are incorporated into fibers. The ceramic particles enhance the friction and/or wear properties of a carbon-carbon composite article made with the impregnated or coated fibers.

US 2008/0090064 A1 (James et al.) discloses a carbon-carbon composite material comprising carbonized woven or nonwoven fabric-based preforms. A method taught in this document contemplates densifying the preform and subsequently adding a ceramic additive thereto in order to enhance the properties of the final product.

US 2008/0041674 A1 (Walker et al.) discloses annular drive inserts which are placed within an annular opening within a brake disk. The annular drive inserts may comprise carbon-carbon composite which has been treated with antioxidant.

US 7,374,709 B2 (Bauer) describes a method in which specific end-use application friction requirements are satisfied by tailoring a level of carbon in a selected carbon/carbon preform, heat treating the carbon/carbon composite preform to affect thermal conductivity so as to optimize overall braking performance prior to ceramic processing, and by selecting an optimum level of ceramic hard phase to achieve satisfactory friction disc wear life and friction characteristics of a resulting braking material.

### SUMMARY OF THE INVENTION

Very briefly, the present invention improves on conventional processing by employing nonwoven fabric segments that are significantly heavier than corresponding nonwoven fabric segments used in conventional processing. This improvement can also be performed in conjunction with increasing the needling rate used to manufacture the preform and reducing the number of CVD cycles necessary to impart a given density to the preform.

The carbon-carbon composite materials provided by the present invention are useful as friction materials, such as brake discs and pads. Carbon-carbon composites in accordance with the present invention are normally made by needling together fabric (woven or nonwoven) made from carbon-containing fibers such as PAN or pitch, followed by carbonizing the fabric (preforms). However, the carbon fiber preforms can be needled either in the carbonized or in an uncarbonized state. The un-carbonized fiber preforms would have to go through a carbonization/heat-treat step following the needling process. It should be noted that final preform thickness and fiber volume is also controlled at carbonization, for instance by varying the level of pressure applied to the preforms during carbonization. That is, the preforms may be unconstrained during carbonization (i.e., no pressure is applied to them). Or the preforms may be constrained during carbonization, typically by means of applying pressure (e.g., weights placed on top of the preforms). The preforms are then infiltrated via CVD/CVI processing in order to increase their density, resulting in a carbon-carbon composite which is suitable for use as, e.g. a brake disc or pad in aircraft and automotive brake systems.

The preform manufacturing method described in this invention benefits from lowered manufacturing cycle time, reduced cost of manufacturing, and at the same time increased density of the final composite.

The present invention provides a method of making a carbon-carbon composite brake disc or pad. The method of this invention provides a fibrous nonwoven fabric segment comprised of oxidized polyacrylonitrile fibers, wherein the segment is a produced from a fabric which has a high basis weight - in the range from 1250 grams per square meter to 3000 grams per square meter - as compared to conventional segments (1000 grams per square meter). The method makes use of a needling machine capable of needling layers of these high basis weight fibrous fabric segments to one another. First, two layers of the high basis weight fibrous fabric segments are needled to one another and then sequential layers of the high basis weight fibrous fabric segments are needled on top of the layers thereof which have previously been needled together. In this manner, the high basis weight fibrous fabric segment layers are combined into a brake disc or pad preform. The preceding step is continued until the preform composed of needled fabric segment layers reaches a thickness suitable for manufacturing a brake disc or pad from it. The fibrous preform is carbonized to obtain the final carbon-carbon composite preform. Optionally, the fabric may be carbonized prior to needling instead of or in addition to being carbonized after needling. The carbonized needled fibrous fabric preform is infiltrated via CVD/CVI processing in order to produce a carbon-carbon composite brake disc or pad.

In the manufacturing method provided by the present invention, the preform composed of needled high basis weight fabric segment layers reaches a thickness suitable for manufacturing a brake disc or pad therefrom after a needling time which is 80% or less the needling time necessary to produce a preform having the same thickness from an otherwise similar fibrous nonwoven fabric segment having a conventional basis weight of 1000 grams per square meter subjected to identical processing conditions. It is understood herein that "an otherwise similar fibrous nonwoven fabric segment" indicates that the present invention employs - for the production of a brake disc or pad having given dimensions - segments with the same length and width as conventional, previously known manufacturing techniques. The fabric segments in the present invention, however, are thicker and therefore heavier than the segments conventionally employed to make carbon-carbon composite brake discs or pads. Further information relating to fabric segments as used in the manufacture of brake discs and pads can be found in US 6,691,393 B2 (Mark C. James, Terence B. Walker, and Neil Murdie), incorporated herein by reference, and in various patents cited therein.

Manufacturing brake discs or pads in accordance with this invention includes die-cutting the carbonized preform to near net shape prior to the CVD/CVI densification step. Typically, a brake disc or brake pad preform will be 1 to 4 inches in thickness, and the resulting final product brake disc or brake pad preform manufactured therefrom will be, respectively, 0.5 to 1.75 inches in thickness. The thickness of the preform is normally reduced by conventional machining steps such as die-cutting which are conducted in order to facilitate densification of the preform.

The density of the carbon-carbon composite brake disc or pad produced by the above-described method is at least 1.70 grams per cubic centimeter, and is often in the range 1.75 to 1.80 g/cc.

Processing in accordance with the present invention can also be performed in conjunction with increasing the RPM of the needler bowl by a factor of at least 25% above conventional manufacturing RPM of 2 RPM. The needler may be an annular needler in which the first layer of high basis weight fibrous fabric is placed on a pliable material, such as a foam ring, that allows the needles to penetrate without damaging the needles. Subsequent layers of fabric would then be placed one on top of the other over the foam ring of the needler. In one option for practicing this invention, the needler is run at a stroke speed of at least 875 strokes per minute to combine the high basis weight fibrous fabric layers into a fibrous preform.

### DETAILED DESCRIPTION OF THE INVENTION

High performance carbon brakes for aerospace and automotive applications are typically provided by needle punching oxidized PAN fibers into a preform using specialized equipment called needlers. The preform is needled to a desired needle-punch density which is controlled by the needle stroke rate, the needle pattern density, and in some cases by rotational speed of the needler bowl. In accordance with the present invention, the needlers are run at a faster rate for shorter time periods, and the fiber volume fraction of the final C-C composite may be reduced, as compared to in the manufacture of conventional aircraft and automotive friction materials. The invention thus results in shortened overall cycle time and reduced material and labor costs.

In general, for aircraft brake disc applications the needlers are designed to handle either annular or non-annular preform geometries. Typically, for annular preforms the key parameters which affect cycle time and cost are needler stroke speed, bowl rotational speed, and needle pattern density as well as fiber costs. For non-annular preforms, the key process parameters affecting cycle time and cost are needler stroke rate and needle pattern density as well as fiber costs.

In the case of annular preforms, the key process parameters affecting cycle time are needle stroke rate (typically 700 strokes / min) and the rotational bowl speed (typically speed is 2 rpm). Increasing the bowl rotation rate by 50% (3 rpm) while keeping the number of needling strokes per minute at 350:1 allows the cycle time which is necessary to produce the preform to be reduced by about 33%. Another cost advantage from the faster cycle time is the reduction in capital investment necessary to produce a given quantity of preforms.

Increasing the areal weight of carbon fiber segments used in the final composite leads to reduced materials costs and cycle times. The increased areal weight fabric segments permit faster needling. Moreover, for a given final density, the number of cycles of CVD required can be reduced, because more open (less densely packed) fabric layers may be employed when each segment has a higher areal weight. This is because fewer, higher areal weight fabric segments require less needling to make a fibrous preform. This innovation results in a more open fabric which has wider, deeper pores, which are easier to infiltrate by CVD/CVI processing. Therefore, fewer CVD/CVI cycles are required to meet final density requirements, thereby providing additional capital avoidance for CVD/CVI investment.

### Manufacturing parameters.

Typically, this invention employs oxidized PAN fibers to make the preforms and subsequently the carbon-carbon composite friction materials (e.g., brake discs and pads). The oxidized PAN fibers may be subjected to low temperature or high temperature heat treatments in accordance with techniques that are known in the art. The oxidized PAN fibers are generally used in the form of nonwoven oxidized PAN fabric segments. Conventional nonwoven fabrics employed for the production of brake discs and pads have a basis weight of about 1000 grams per square meter. In accordance with the present invention, one employs nonwoven fabrics having basis weights ranging from 1250 grams per square meter to 3000 grams per square meter, more preferably, a nonwoven fabric having a basis weight in the range 1350 to 2000 grams per square meter. The oxidized PAN fabrics may be subjected to low temperature or high temperature carbonization processing in accordance with techniques that are known in the art. The oxidized PAN fabrics may be joined together in the present invention by rotating annular needling, by non-rotating annular needling, or by non-annular needling. In each case, an optional constrained or unconstrained carbonization step may be employed. Likewise in each case, and optional die cutting step may be employed. In each case, subsequent to the carbonization and/or die cutting step if used, a CVD/CVI step is employed. In each case, an optional heat treatment step may be employed after the CVD/CVI step. The resulting carbon-carbon composite is then subjected to a final machining step.

### General discussion.

Disclosure relevant to the needling technology which is improved upon in the present invention may be found in US 5,338,320 - PRODUCTION OF SHAPED FILAMENTARY STRUCTURES, US 5,882,781 - SHAPED FIBROUS FABRIC STRUCTURE COMPRISING MULTIPLE LAYERS OF FIBROUS MATERIAL, and US 6,691,393 B2 - WEAR RESISTANCE IN CARBON FIBER FRICTION MATERIALS. The disclosure of each of US 5,338,320, US 5,882,781, and US 6,691,393 B2 is incorporated herein by reference.

A non-annular needler does not need a foam ring. Typically a base plate with holes that match the needle pattern is used, since there is no bowl and there is no rotation of the bowl. A foam ring (or similar pliable, soft material) is only required for an annular needler.

Following manufacture of the preform, it is the carbonization step that is used (constrained or unconstrained) to control the final volume fraction of the final composite (and final density). If a preform has the same amount of fiber as the baseline preform material, the final fiber volume fraction of the composite can be decreased and final density can be increased if non-constrained carbonization is used (but the composite would be thicker). If a preform has less fiber than the baseline preform material, the final volume fraction and density could be kept the same as the baseline if the carbonization is constrained (but a thinner preform would result). But if carbonization is left unconstrained, the final composite would have lower fiber volume fraction, and higher density (with same thickness (compared with baseline).

The fabrics - for instance, nonwoven PAN segments - are commercially available. In accordance with the present invention, they are needled as described herein, then carbonized (that is, converted to carbon fiber) at temperatures in the range 1000-2700°C. They are then die-cut to a nominal size (if required) for a given platform, and densified by CVD/CVI processing. Finally, they are subjected to a final heat treatment at a temperature typically in the range 1000-2540°C.

**Carbonization.** The carbonization process as it is applied to carbon-fiber precursor fibrous materials is in general well known to those skilled in the art. The fiber preforms are typically heated in a retort under inert or reducing conditions to remove the non-carbon constituents (hydrogen, nitrogen, oxygen, etc.) from the fibers. Carbonization can be carried out either in a furnace, a hot isostatic press, an autoclave, or in a uniaxial hot press. In each of these techniques, the fibrous fabric is heated to the range of 600° to about 1000°C while maintaining an inert atmosphere in the pressure range of 1 to 1000 atmospheres. In one approach, for instance, the retort may be purged gently with nitrogen for approximately 1 hour, then it is heated to 900°C in 10-20 hours, and thence to 1050°C in 1-2 hours. The retort is held at 1050°C for 3-6 hours, then allowed to cool overnight. Carbonization is typically carried out up to 1800°C.

**CVD/CVI.** Chemical vapor deposition (CVD) of carbon is also known as chemical vapor infiltration (CVI). In a CVD/CVI process, carbonized, and optionally heat treated, preforms are heated in a retort under the cover of inert gas, typically at a pressure below 100 torr. When the parts reach a temperature of 900° to 1200°C., the inert gas is replaced with a carbon-bearing gas such as natural gas, methane, ethane, propane, butane, propylene, or acetylene, or combinations of these gases. When the hydrocarbon gas mixture flows around and through the fiber preform porous structures, a complex set of dehydrogenation, condensation, and polymerization reactions occur, thereby depositing the carbon atoms within the interior and onto the surface of the fiber preform porous structures. Over time, as more and more of the carbon atoms are deposited onto the carbon fiber surfaces, the fiber preform becomes more dense. This process is sometimes referred to as densification, because the open spaces in the fiber preform are eventually filled with a carbon matrix until generally solid carbon parts are formed. Depending upon the pressure, temperature, and gas composition, the crystallographic structure and order of the deposited carbon can be controlled, yielding anything from an isotropic carbon to a highly anisotropic, ordered carbon. US 2006/0046059 A1 (Arico et al.), the disclosure of which is incorporated herein by reference, provides an overview of CVD/CVI processing.

**Heat treatment.** Intermediate and/or final heat treatment of the preforms is usually applied to modify the crystal structure of the carbon. Heat treatment is employed to modify the mechanical, thermal, and chemical properties of the carbon in the preform. Heat treatment of the preforms is typically conducted in the range of 1400° to 2800°C. The effect of such a treatment on graphitizable materials is well known. Higher temperatures increase the degree of crystalline order in the carbon material, as measured by such analytical techniques as X-ray diffraction or Raman spectroscopy. Higher temperatures also increase the thermal conductivity of the carbon in the products, and the elastic modulus of the final C-C composite.

### EXAMPLES

*EXAMPLE A - Rotating Annular Needlers.* Pre-cut segments of high areal weight oxidized polyacrylonitrile (O-PAN) fiber nonwoven fabric, each having an increased weight as compared to conventionally employed segments, are layered on a foam ring in a needler. The resulting high areal weight fabric segments are pre-cut based upon the size of the friction article to be produced. The high areal weight fabric segments are joined together by needles that have hooked (barbed) ends, which push through the PAN fiber segments and bind each subsequent layer by punching, pushing, or pulling loose fibers through each layer during the downstroke and upstroke. The first layer is needled to the foam ring. Additional needling of layers continues until the desired weight and thickness (density) is achieved. The preform is then carbonized and die-cut (if required), and subsequently subject to densification and other manufacturing steps. This approach - using high areal weight fabric segments - provides benefits such as reduced cycle time and reduced capital requirements due to speedier processing throughput.

*EXAMPLE B - Rotating Annular Needlers.* In this example, the same process steps used in Example A are repeated with the following exceptions. The number of high areal weight fabric segments used to make the preform are reduced, while the carbonized preform volume fraction is reduced to 19-24 (compared with 25-30% conventionally). This reduced fiber volume fraction in the carbonized and final C-C composite is obtained through the absence of any pressure applied during carbonization (unconstrained). The benefits of this process are: reduction in cycle time compared to the baseline conditions; reduction in materials cost compared to the baseline; capital savings due to the need for fewer needlers; reduced number of CVD/CVI cycles to achiever a given final density; and improved final density of the carbon-carbon composite through replacement of some of the low density PAN fiber with high density CVD/ CVI.

*EXAMPLE C - Non-Rotating Annular Needlers.* In this example, the same process steps used in Example A are repeated with the exception that the needler used is non-rotating. This approach likewise provides benefits such as reduced cycle time and reduced capital requirements due to speedier processing throughput.

*EXAMPLE D - Non Annular Preform geometries.* In this example, the same process steps used in Example A are repeated with the following exceptions. The needler used is non-annular and the carbonization is unconstrained so that the fiber volume fraction in the final composite is between 19-24%. The benefits of this process are: reduction in cycle time compared to the baseline conditions and compared to Example C; capital savings due to the need for fewer needlers; improved final density of the carbon-carbon composite through replacement of low density PAN fiber with high density CVD/ CVI; and reduced number of CVD/CVI cycles to achieve a given final density..

Additional Examples, along with Comparative Examples, are summarized in the Tables which follow. Tables 1 and 2 compare the effects of varying segment areal weight in Examples 1-4 to baseline Comparative Example 1. Table 3 compares low fiber volume preform Example 5 having increased segment areal weight to baseline Comparative Example 2. Table 4 compares non-rotating standard fiber volume annular preform Example 10 having increased segment areal weight to baseline Comparative Example 3. Table 5 compares non-annular low fiber volume preform Example 11 having increased segment areal weight to baseline Comparative Example 4. Tables 6 and 7 provide Examples 6 to 9, illustrating additional embodiments of the present invention. It can be seen that the present invention provides such benefits as decreased processing time (lower needling times necessary to achieve comparable products) as compared to otherwise similar processing employing standard areal weight fabric segments.

| TABLE 1 | | | |
|---|---|---|---|
| Process Step | Rotating Annular | Rotating Annular | Rotating Annular |
| | Comparative Ex. 1 | Example 1 | Example 2 |
| Fiber Type | Oxidized PAN | Oxidized PAN | Oxidized PAN |
| Fabric Composition | 85% ContinuousTow 15% Staple | 75% ContinuousTow 25% Staple | 85% ContinuousTow 15% Staple |
| Fabric Weight | 1000 grams/square meter | 1250 grams/square meter | 1500 grams/square meter |
| Fabric Type | Needle punched nonwoven | Needle punched nonwoven | Needle punched nonwoven |
| Segment Dimensions | Inside Radius: 6 inches Outside Radius: 12 inches Arc: 68 degrees | Inside Radius: 6 inches Outside Radius: 12 inches Arc: 68 degrees | Inside Radius: 6 inches Outside Radius: 12 inches Arc: 68 degrees |
| Needler Settings | Bowl Rotation: 2 rpm Needler Stroke: 700 spm Ratio: 350 to 1 | Bowl Rotation: 2 rpm Needler Stroke: 700 spm Ratio: 350 to 1 | Bowl Rotation: 2 rpm Needler Stroke: 700 spm Ratio: 350 to 1 |
| Oxidized PAN Preform | Preform Wt: 6350 grams Preform Thk: 1.900 inches | Preform Wt: 6350 grams Preform Thk: 1.900 inches | Preform Wt: 6350 grams Preform Thk: 1.900 inches |
| Needling Time (minutes) | Needling Time: 15 minutes | Needling Time: 12 minutes | Needling Time: 10 minutes |
| Carbonization Temperature | 1650 Centigrade | 1650 Centigrade | 1650 Centigrade |
| Carbonized Preform Fiber Volume (%) | 25-30 (constrained) | 25-30 (constrained) | 25-30 (constrained) |
| Carbonized Preform | Preform Wt: 2950 grams Preform Thk: 1.400 inches | Preform Wt: 2950 grams Preform Thk: 1.400 inches | Preform Wt: 2950 grams Preform Thk: 1.400 inches |
| Preform Densification | CVI/CVD | CVI/CVD | CVI/CVD |
| Composite Final Density | ∼ 1.70 grams/cc | ∼ 1.70-1.80 grams/cc | ∼ 1.70-1.80 grams/cc |

| TABLE 2 | | | |
|---|---|---|---|
| Process Step | Rotating Annular | Rotating Annular | Rotating Annular |
| | Comparative Ex. 1 | Example 3 | Example 4 |
| Fiber Type | Oxidized PAN | Oxidized PAN | Oxidized PAN |
| Fabric Composition | 85% Continuous Tow 15% Staple | 75% Continuous Tow 25% Staple | 85% Continuous Tow 15% Staple |
| Fabric Weight | 1000 grams/square meter | 1750 grams/square meter | 2000 grams/square meter |
| Fabric Type | Needle punched nonwoven | Needle punched nonwoven | Needle punched nonwoven |
| Segment Dimensions | Inside Radius: 6 inches Outside Radius: 12 inches Arc: 68 degrees | Inside Radius: 6 inches Outside Radius: 12 inches Arc: 68 degrees | Inside Radius: 6 inches Outside Radius: 12 inches Arc: 68 degrees |
| Needler Settings | Bowl Rotation: 2 rpm Needler Stroke: 700 spm Ratio: 350 to 1 | Bowl Rotation: 2 rpm Needler Stroke: 700 spm Ratio: 350 to 1 | Bowl Rotation: 2 rpm Needler Stroke: 700 spm Ratio: 350 to 1 |
| Oxidized PAN Preform | Preform Wt: 6350 grams Preform Thk: 1.900 inches | Preform Wt: 6350 grams Preform Thk: 1.900 inches | Preform Wt: 6350 grams Preform Thk: 1.900 inches |
| Needling Time (minutes) | Needling Time: 15 minutes | Needling Time: 9 minutes | Needling Time: 8 minutes |
| Carbonization Temperature | 1650 Centigrade | 1650 Centigrade | 1650 Centigrade |
| Carbonized Preform Fiber Volume (%) | 25-30 (constrained) | 25-30 (constrained) | 25-30 (constrained) |
| Carbonized Preform | Preform Wt: 2950 grams Preform Thk: 1.400 inches | Preform Wt: 2950 grams Preform Thk: 1.400 inches | Preform Wt: 2950 grams Preform Thk: 1.400 inches |
| Preform Densification | CVI/CVD | CVI/CVD | CVI/CVD |
| Composite Final Density | ∼ 1.70 grams/cc | ∼ 1.70-1.80 grams/cc | ∼ 1.70-1.80 grams/cc |

| TABLE 3 | | |
|---|---|---|
| Process Step | Rotating Annular | Rotating Annular |
| | Comparative Ex. 2 | Example 5 |
| Fiber Type | Oxidized PAN | Oxidized PAN |
| Fabric Composition | 65% ContinuousTow 35% Staple | 65% ContinuousTow 35% Staple |
| Fabric Weight | 1000 grams/square meter | 1350 grams/square meter |
| Fabric Type | Needle punched nonwoven | Needle punched nonwoven |
| Segment Dimensions | Inside Radius: 6 inches Outside Radius: 12 inches Arc: 68 degrees | Inside Radius: 6 inches Outside Radius: 12 inches Arc: 68 degrees |
| Needler Settings | Bowl Rotation: 2 rpm Needler Stroke: 700 rpm Ratio: 350 to 1 | Bowl Rotation: 2 rpm Needler Stroke: 700 rpm Ratio: 350 to 1 |
| Oxidized PAN Preform | Preform Wt: 4940 grams Preform Thk: 1.480 inches | Preform Wt: 4940 grams Preform Thk: 1.480 inches |
| Needling Time (minutes) | Needling Time: 11 minutes | Needling Time: 8 minutes |
| Carbonization Temperature | 2100 Centigrade | 2100 Centigrade |
| Carbonized Preform Fiber Volume (%) | 19-24 (unconstrained) | 19-24 (unconstrained) |
| Carbonized Preform | Preform Wt: 2300 grams Preform Thk: 1.400 inches | Preform Wt: 2300 grams Preform Thk: 1.400 inches |
| Preform Densification | CVI/CVD | CVI/CVD |
| Composite Final Density | ∼ 1.70-1.80 grams/cc | ∼ 1.70-1.80 grams/cc |

| TABLE 4 | | |
|---|---|---|
| Process Step | Non-Rotating Annular | Non-Rotating Annular |
| | Comparative Ex. 3 | Example 10 |
| Fiber Type | Oxidized PAN | Oxidized PAN |
| Fabric Composition | 65% Continuous Tow 35% Staple | 65% Continuous Tow 35% Staple |
| Fabric Weight | 1000 grams/square meter | 1500 grams/square meter |
| Fabric Type | Needle punched nonwoven | Needle punched nonwoven |
| Segment Dimensions | Inside Radius: 6 inches Outside Radius: 12 inches Arc: 360 degrees | Inside Radius: 6 inches Outside Radius: 12 inches Arc: 360 degrees |
| Needler Settings | Bowl Rotation: N/A Needler Stroke: 875 rpm Ratio: N/A | Bowl Rotation: N/A Needler Stroke: 875 rpm Ratio: N/A |
| Oxidized PAN Preform | Preform Wt: 6350 grams Preform Thk: 1.900 inches | Preform Wt: 6350 grams Preform Thk: 1.900 inches |
| Needling Time (minutes) | Needling Time: 10 minutes | Needling Time: 6.75 minutes |
| Carbonization Temperature | 2400 Centigrade | 2400 Centigrade |
| Carbonized Preform Fiber Volume (%) | 25-30 (constrained) | 25-30 (constrained) |
| Carbonized Preform | Preform Wt: 2950 grams Preform Thk: 1.400 inches | Preform Wt: 2950 grams Preform Thk: 1.400 inches |
| Preform Densification | CVI/CVD | CVI/CVD |
| Composite Final Density | ∼ 1.70 grams/cc | ∼ 1.70-1.80 grams/cc |

| TABLE 5 | | |
|---|---|---|
| Process Step | Non-Annular | Non-Annular |
| | Comparative Ex. 4 | Example 11 |
| Fiber Type | Oxidized PAN | Oxidized PAN |
| Fabric Composition | 65% Continuous Tow 35% Staple | 65% Continuous Tow 35% Staple |
| Fabric Weight | 1000 grams/square meter | 1500 grams/square meter |
| Fabric Type | Needle punched nonwoven | Needle punched nonwoven |
| Segment Dimensions | Length: 28 inches Width: 28 inches Arc: N/A | Length: 28 inches Width: 28 inches Arc: N/A |
| Needler Settings | Bowl Rotation: N/A Needler Stroke: 875 rpm Ratio: N/A | Bowl Rotation: N/A Needler Stroke: 875 rpm Ratio: N/A |
| Oxidized PAN Preform | Preform Wt: 11,600 grams Preform Thk: 1.500 inches | Preform Wt: 11,600 grams Preform Thk: 1.500 inches |
| Needling Time (minutes) | Needling Time: 8 minutes | Needling Time: 5.5 minutes |
| Carbonization Temperature | 2400 Centigrade | 2400 Centigrade |
| Carbonized Preform | 19-24 | 19-24 |
| Fiber Volume (%) | (unconstrained) | (unconstrained) |
| Carbonized Preform | Preform Wt: 5390 grams Preform Thk: 1.400 inches | Preform Wt: 5390 grams Preform Thk: 1.400 inches |
| Preform Densification | CVI/CVD | CVI/CVD |
| Composite Final Density | ∼ 1.70-1.80 grams/cc | ∼ 1.70-1.80 grams/cc |

| TABLE 6 | | |
|---|---|---|
| Process Step | Rotating Annular | Rotating Annular |
| | Example 6 | Example 7 |
| Fiber Type | Oxidized PAN | Oxidized PAN |
| Fabric Composition | 65% Continuous Tow | 65% Continuous Tow |
| | 35% Staple | 35% Staple |
| Fabric Weight | 1350 grams/square meter | 1350 grams/square meter |
| Fabric Type | Needle punched nonwoven | Needle punched nonwoven |
| Segment Dimensions | Inside Radius: 6 inches | Inside Radius: 6 inches |
| | Outside Radius: 12 inches | Outside Radius: 12 inches |
| | Arc: 68 degrees | Arc: 68 degrees |
| Needler Settings | Bowl Rotation: 3 rpm | Bowl Rotation: 3 rpm |
| | Needler Stroke: 1050 rpm | Needler Stroke: 1050 rpm |
| | Ratio: 350:1 | Ratio: 350:1 |
| Oxidized PAN Preform | Preform Wt: 4940 grams | Preform Wt: 6350 grams |
| | Preform Thk: 1.480 inches | Preform Thk: 1.900 inches |
| Needling Time (minutes) | Needling Time: 6 minutes | Needling Time: 7 minutes |
| Carbonization Temperature | 2100 Centigrade | 1650 Centigrade |
| Carbonized Preform | 19-24 | 25-30 |
| Fiber Volume (%) | (unconstrained) | (constrained) |
| Carbonized Preform | Preform Wt: 2300 grams | Preform Wt: 2300 grams |
| | Preform Thk: 1.400 inches | Preform Thk: 1.400 inches |
| Preform Densification | CVI/CVD | CVI/CVD |
| Composite Final Density | ∼ 1.70-1.80 grams/cc | ∼ 1.70-1.80 grams/cc |

| TABLE 7 | | |
|---|---|---|
| Process Step | Rotating Annular Example 8 | Rotating Annular Example 9 |
| Fiber Type | Oxidized PAN | Oxidized PAN |
| Fabric Composition | 65% Continuous Tow 35% Staple | 65% Continuous Tow 35% Staple |
| Fabric Weight | 1750 grams/square meter | 2000 grams/square meter |
| Fabric Type | Needle punched nonwoven | Needle punched nonwoven |
| Segment Dimensions | Inside Radius: 6 inches Outside Radius: 12 inches Arc: 68 degrees | Inside Radius: 6 inches Outside Radius: 12 inches Arc: 68 degrees |
| Needler Settings | Bowl Rotation: 3 rpm Needler Stroke: 1050 rpm Ratio: 350:1 | Bowl Rotation: 3 rpm Needler Stroke: 1050 rpm Ratio: 350:1 |
| Oxidized PAN Preform | Preform Wt: 4940 grams Preform Thk: 1.480 inches | Preform Wt: 4940 grams Preform Thk: 1.480 inches |
| Needling Time (minutes) | Needling Time: 4.5 minutes | Needling Time: 3.5 minutes |
| Carbonization Temperature | 2100 Centigrade | 2100 Centigrade |
| Carbonized Preform Fiber Volume (%) | 19-24 (unconstrained) | 19-24 (unconstrained) |
| Carbonized Preform | Preform Wt: 2300 grams Preform Thk: 1.400 inches | Preform Wt: 2300 grams Preform Thk: 1.400 inches |
| Preform Densification | CVI/CVD | CVI/CVD |
| Composite Final Density | ∼ 1.70-1.80 grams/cc | ∼ 1.70-180 grams/cc |

## Claims

1. A method of making a carbon-carbon composite brake disc or pad, which method comprises the steps of:
providing a fibrous nonwoven fabric segment comprised of oxidized polyacrylonitrile fibers, wherein said segment is produced from a fabric which has a high basis weight, wherein said high basis weight is in the range from 1250 grams per square meter to 3000 grams per square meter;
providing a needler capable of needling layers of said high basis weight fibrous fabric segments to one another;
needling two layers of said high basis weight fibrous fabric segments to one another and then needling sequential layers of said high basis weight fibrous fabric segments on top of the layers thereof which have previously been needled together, thereby combining the high basis weight fibrous fabric segment layers into a brake disc or pad preform;
continuing the preceding step until the preform composed of needled fabric segment layers reaches a thickness suitable for manufacturing a brake disc or pad therefrom;
carbonizing the fibrous preform to obtain a carbon-carbon preform; and
infiltrating the resulting carbonized needled fibrous fabric preform via CVD/CVI processing in order to produce a carbon-carbon composite brake disc or pad which has a density of at least 1.70 grams per cubic centimeter,
whereby the preform composed of needled high basis weight fabric segment layers reaches a thickness suitable for manufacturing a brake disc or pad therefrom after a needling time which is 80% or less the needling time necessary to produce a preform having the same thickness from an otherwise similar fibrous nonwoven fabric segment having a conventional basis weight of 1000 grams per square meter subjected to identical processing conditions.

2. The method of claim 1, wherein said high basis weight fibrous nonwoven fabric segment has a basis weight in the range 1350 to 2000 grams per square meter.

3. The method of claim 1, wherein the fabric is carbonized prior to needling instead of or in addition to being carbonized after needling.

4. The method of claim 1, comprising die-cutting the carbonized preform to near net shape prior to the CVD/CVI densification step.

5. The method of claim 1, wherein the density of the brake disc or brake pad that is produced is in the range 1.75 to 1.80 g/cc.

6. The method of claim 1, wherein the brake disc or brake pad preform produced is 1 to 4 inches in thickness, and wherein the brake disc or brake pad preform manufactured therefrom is 0.5 to 1.75 inches in thickness.

7. The method of claim 1, wherein the RPM of the needler bowl is increased by a factor of at least 50% above conventional manufacturing RPM of 2 RPM.

8. The method of claim 1, wherein said needler is an annular needler in which the first layer of high basis weight fibrous fabric is placed on a pliable material that allows the needles to penetrate without damaging the needles.

9. The method of claim 8, wherein the said pliable material is a foam ring and subsequent layers of fabric are placed one on top of the other over the foam ring of the needler.

10. The method of claim 1, wherein the needler runs at a stroke speed of at least 875 strokes per minute to combine the high basis weight fibrous fabric layers into a fibrous preform.
